(19) Europäisches Patentamt
European Patent Office
Office européen des brevets

(11) **EP 1 494 126 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(51) Int Cl.:
**G06F 17/00** *(2006.01)* **G01N 25/48** *(2006.01)*

(21) Anmeldenummer: **03102015.9**

(22) Anmeldetag: **04.07.2003**

(54) **Verfahren und Vorrichtung zur Stoffuntersuchung**

Method and Apparatus for the examination of a material

Procédé et appareil pour analyser un matériau

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**05.01.2005 Patentblatt 2005/01**

(73) Patentinhaber: **Mettler-Toledo AG**
**8606 Greifensee (CH)**

(72) Erfinder:
• **Hütter, Thomas**
**5443, Niederrohrdorf (CH)**
• **Heitz, Christoph**
**8353, Elgg (CH)**

• **Schawe, Jürgen**
**8363 Bichelsee (CH)**

(74) Vertreter: **Leinweber & Zimmermann**
**Rosental 7**
**80331 München (DE)**

(56) Entgegenhaltungen:
EP-A- 0 559 362   US-A- 4 842 417
US-A- 5 148 365   US-A- 5 453 940
US-A- 6 092 017

• **PATENT ABSTRACTS OF JAPAN vol. 1998, no. 10, 31. August 1998 (1998-08-31) & JP 10 123034 A (NKK CORP), 15. Mai 1998 (1998-05-15)**

**Beschreibung**

Die Erfindung bezieht sich auf ein Verfahren zur thermoanalytischen Stoffuntersuchung, bei dem ein Stoff einer Anregung mit mindestens einer einer veränderlichen Temperatur entsprechenden Anregungsgröße ausgesetzt wird, die eine beobachtbare Antwort mit mindestens einer einem Wärmestrom eines dynamischen Thermoanalyseverfahrens oder einer Heizleistungsdifferenz eines dynamischen Leistungskompensations-Thermoanalyseverfahrens entsprechenden Antwortgröße hervorruft, welche mit Hilfe einer Zeitreihe von Werten der Anregung und Meßwerten der Antwort zur Ermittlung der Wärmekapazität des Stoffs ausgewertet wird, sowie auf eine Vorrichtung zur Durchführung dieses Verfahrens.

Bei dem der Anregung ausgesetzten Stoff kann es sich sowohl um einen Reinstoff als auch um ein System oder Gemisch von Stoffen oder Materialien handeln.

Die dynamische Thermoanalyse, bei der die Anregung durch ein vorgegebenes zeitliches Temperaturprogramm erfolgt, welchem der Stoff ausgesetzt und als Antwort der von der Probe hervorgerufene Wärmestrom erfaßt wird, ist weithin bekannt. Häufig wird dieses Verfahren als Differenzmethode ausgeführt, bei welcher der Stoff und ein bekannter Referenzstoff gemäß dem Temperaturprogramm angeregt und als Antwort die Differenz zwischen den von dem Stoff und dem Referenzstoff hervorgerufenen Wärmeströmen herangezogen wird.

Bei einem derartigen bekannten Differenzthermoanalyseverfahren (EP-A-0 559 362) besteht das die Anregung bildende Temperaturprogramm aus einer linear ansteigenden Rampe, der eine periodische Temperaturmodulation vorgegebener Frequenz und vorgegebener Amplitude überlagert ist. Die Auswertung der als Antwort erhaltenen modulierten Wärmestromdifferenz beruht auf einer Aufspaltung des diese Wärmestromdifferenz darstellenden gemessenen Antwortsignals in zwei Signalkomponenten, deren eine von der Heizrate abhängig sein soll und deren andere nicht von der Heizrate abhängt. Die eine Signalkomponente wird durch Mittelwertbildung über jeweils eine oder mehrere Modulationsperioden gewonnen, stellt also eine in dem Antwortsignal enthaltene Gleichkomponente dar. Bei der anderen Signalkomponente handelt es sich um die in dem Antwortsignal enthaltene Wechselkomponente, die mit der vorgegebenen Modulationsfrequenz oszilliert und durch Differenzbildung zwischen dem gemessenen Antwortsignal und seiner Gleichkomponente ermittelt wird. Diese Art der Anregung und Auswertung des Antwortsignals beruht auf der Anwendung einer einzigen fest vorgegebenen Modulationsfrequenz, wodurch selektiv nur solche Ereignisse angeregt werden, die zu derselben Frequenz oder deren Oberwellen gehören.

Diese Beschränkung auf eine einzige Anregungsfrequenz vermeidet ein anderes bekanntes Thermoanalyseverfahren (EP-A-1 091 208), das eine stochastische Anregung vorsieht und das Antwortsignal bei dessen Auswertung einer Korrelationsanalyse unterzieht. Allerdings steigt bei der Korrelationsanalyse, wenn eine hohe Genauigkeit gefordert wird, die notwendige Meßzeit an.

Ein anderes bekanntes Verfahren (US-A-4 842 417) beruht auf der Auswertung eines Wärmestroms, dessen Quelle ein Aluminiumschmelzbad und dessen Senke eine in das Aluminiumschmelzbad eingetauchte Kaltfingeranordnung ist. Dem Transport dieses Wärmestroms dient ein die Kaltfingeranordnung durchfließender Luftstrom, der sich in der Kaltfingeranordnung durch Wärmeaustausch mit dem Schmelzbad auf eine Temperatur T aufheizt, wobei diese Temperatur T gemessen wird. Ferner wird der Temperaturunterschied DT zwischen der in die Kaltfingeranordnung einströmenden und der aus der Kaltfingeranordnung ausströmenden Luft gemessen, um dadurch die Wärmemenge zu erfassen, die der Luftstrom bei seinem Durchfluß durch die Kaltfingeranordnung aufnimmt. Der durch diesen Luftstrom transportierte Wärmestrom wird dadurch dynamisch verändert, daß der in die Kaltfingeranordnung einströmende Luftstrom eine intermittierend betriebene Heizanordnung durchläuft.

Für den Zusammenhang zwischen der gemessenen Temperatur T und der gemessenen Temperaturdifferenz DT wird ein Modellansatz mit sechs Parametern verwendet. Die Werte der sechs Modellparameter werden mit Hilfe des Modells aus einer ausreichenden Zeitreihe der Meßwerte bestimmt.

Dem verwendeten Modellansatz liegt die Annahme zugrunde, daß sich zwischen der Kryolithschmelze, die in der Aluminiumreduktionszelle auf der Innentemperatur (bulk temperature) Tm gehalten wird, und der Kaltfingeranordnung eine Grenzschicht aus erstarrtem Kryolith ausbildet, durch die der von dem Temperaturgefälle zwischen der Innentemperatur Tm und der in der Kaltfingeranordnung herrschenden Temperatur T hervorgerufene Wärmestrom hindurchfließt. Zur näherungsweisen Beschreibung dieses Temperaturgefälles wird die Erstarrungsschicht in zwei Teilschichten unterteilt, deren eine eine mittlere Temperatur T1 und deren andere eine mittlere Temperatur T2 aufweisen soll. Für diese beiden Schichten und die Kaltfingeranordnung werden Gleichungen für das thermische Gleichgewicht angesetzt. In diese Gleichgewichtsgleichungen gehen als physikalische Parameter der Wärmeübertragungskoeffizient hrn der Kryolithschmelze, der Wärmeübertragungskoeffizient hg zwischen der Wand der Kaltfingeranordnung und der die Kaltfingeranordnung durchströmenden Luft, die Dicke z der erstarrten Kryolithschicht, die Wärmeleitfähigkeit k der erstarrten Kryolithschicht und eine als "Wärme-Raum-Geschwindigkeit" bezeichnete Größe $Gc_g/C$ ein, in der G die Flußrate der Luft, Cg die Wärmekapazität der Luft und C die effektive Kapazität der Kaltfingeranordnung ist. Dadurch ist das Modell und der Zusammenhang seiner Modellparameter mit den physikalischen Parametern festgelegt. Dies erfordert also die Annahme eines konkreten physikalischen Modells, in dem die diesem physikalischen Modell zugrundeliegenden physikalischen Parameter durch die Kenntnis des Aggregatzustandes des Schmelzbades vollständig festgelegt sind. Ein dieser konkreten physikalischen Modellvorstellung nicht entsprechender Stoff oder eine ihr nicht entsprechende Anregung können deshalb mit diesem Modell nicht erfolgversprechend untersucht werden. Außerdem handelt es sich bei einem der genannten physikalischen Parameter, nämlich der als "Wärme-Raum-Geschwindigkeit" bezeichneten Größe Gc/C gar nicht um einen physikalischen Parameter des Systems (Kryolithschmelze mit Kruste), sondern um einen physikalischen Parameter der Anregung (Kaltfingeranordnung). Da folglich ein aus dem Modell zu bestimmender Parameter physikalisch unmittelbar mit der Anregung verbunden ist, kann selbst eine physikalisch grundsätzlich modellentsprechende Anregung bei unterschiedlicher technischer Realisierung deshalb mit diesem Modell nicht erfolgversprechend untersucht werden.

US-A-5 453 940 befaßt sich mit der Darstellung eines dynamischen Systems als Kurve in einem vieldimensionalen Phasenraum. Aus Meßwerten dieser Kurve wird ein mathematisches Modell ermittelt, das dazu verwendet wird, die gemessene Kurve zu künftigen Zeiten hin zu extrapolieren. Hierbei geht es also nicht um die Modellierung eines Zusammenhangs zwischen einer Anregung und einer Antwort, sondern um eine zeitliche Extrapolation der gemessenen Phasenraumtrajektorie. Aus gemessenen Daten eines Systems soll entnommen werden können, ob das System aus seinem Normalverhalten heraus chaotisch wird und auf eine Katastrophe zusteuert. Dazu sollen aus den gemessenen Daten Vorhersagen über die Zukunft des Systems getroffen werden können. Ein weiteres Ziel ist die Ähnlichkeitsanalyse von unterschiedlichen Systemen. Die Vorhersage über die Zukunft des Systems wird im wesentlichen in zwei Schritten möglich: Zunächst werden die gemessenen und digitalisierten Daten (Signale V1) in eine unterschiedliche mathematische Darstellung gebracht, nämlich in eine Phasenraumdarstellung mit allgemeinen Koordinaten gk(i). In dieser Phasenraumdarstellung bildet eine aufeinanderfolgende Sequenz aus einer Anzahl von Signalen V, nämlich ein Takensvektor T, einen Punkt des Phasenraums. Damit bildet eine Sequenz dieser Takensvektoren eine Kurve im Phasenraum. Die Meßergebnisse werden darüber hinaus noch um weitere von einem Heuristikprozessor extrapolierte Daten erweitert, wobei das den extrapolierten Daten zugeordnete Zeitintervall so gewählt ist, daß es nicht größer als die inhärent vorhersagbare Zeitskala des Systems ist. Der zweite Schritt betrifft einen Vergleich einer so ermittelten Phasenraumkurve mit Referenzdaten mittels des Heuristikprozessors 44. Diese Referenzdaten werden in einem Trainingsmodus erhalten und gespeichert, d. h. das komplette Verhalten eines bekannten Systems steht in Phasenraumdarstellung bzw. Matrixelementen einer Gewichtungsmatrix für einen Vergleich zur Verfügung. Erst in einem Testmodus wird das bekannte System durch ein unbekanntes System ersetzt, und es werden Daten des unbekannten Systems gemessen. Aus diesen Meßwerten des unbekannten Systems wird anhand der Phasenraumbasisvektoren eine entsprechende Phasenraumdarstellung des unbekannten Systems ermittelt. Ist ein Fehlerwert, d. h. ein Unterschied zwischen dem bekannten und dem unbekannten System, ausreichend klein, so kann davon ausgegangen werden, daß sich das unbekannte System auch in einer bestimmten Folgezeit so verhält wie das bekannte System. Wenn z. B. das bekannte System in der bestimmten Folgezeit stabil ist, kann also auch davon ausgegangen werden, daß das unbekannte System in diesem Zeitraum stabil bleibt. Als weiterer Testmodus kann z. B. ein Vergleich mit einem unterschiedlichen System auf Phasenraumebene durchgeführt werden. Es wird also nicht ein Zusammenhang zwischen einer physikalischen Anregung eines Stoffes mit seiner physikalischen Antwort nachgebildet, sondern es werden lediglich Meßwerte eines im Betrieb befindlichen Systems mit Referenzdaten verglichen, um aus den gemessenen Daten Vorhersagen über die nahe Zukunft des Systems erhalten zu können. Soweit dabei für diesen Vergleich ein mathematisches Modell herangezogen wird, aus dem die Meßdaten in eine Phasenraumdarstellung gebracht werden können und mit dem die Meßdaten oder die Phasenraumtrajektorie extrapoliert werden, wird doch ein vollkommen unterschiedliches Problem ("Zukunftsvorhersage" für das System in Betrieb) mit vollkommen unterschiedlichen Mitteln (Transformation von Meßdaten in eine Phasenraumdarstellung, Extrapolation und Vergleich mit Referenzdaten) gelöst.

JP-A-10 123 034 untersucht das Verhalten metallischer Werkstückproben unter mechanischer Lasteinwirkung bis zum Bruch. Dabei werden gleichzeitig der zeitliche Verlauf der von einem keilförmigen Laststempel ausgeübten Belastung, die dadurch hervorgerufene Deformation der Werkstückprobe und deren Temperaturverlauf aufgezeichnet. Eine Modulierung dieser Verläufe ist jedoch nicht vorgesehen.

Miekina et al. "Dynamic reconstruction of measurements and calibration of measuring systems" von Measure 14 (1993) pp. 63-72 erläutert eingangs allgemein die Rekonstruktion zu messender Größen, insbesondere auch die Rekonstruktion von thermokinetischen Prozessen in der dynamischen Kalorimetrie. Dabei wird von einem Modell des Meßprozesses ausgegangen, bei dem ein Meßobjekt, dessen physikalische Größen durch einen zu messenden Vektor x aus skalaren Variablen modelliert werden, einer Anregung $\{u_n\}$ und einem Vektor $\{v\}$ von Einflußgrößen ausgesetzt sein kann, und $\{y_n\}$ Rohmeßergebnisse bezeichnen, die aus dem Meßobjekt gewonnen werden. Im weiteren wird allerdings nur eine spezielle Klasse von Rekonstruktions- und Kalibrierungsproblemen (DRC) dieses Modells betrachtet, in denen die Anregung $\{u\}$ und die Einflußgröße $\{v\}$ nicht berücksichtigt wird. Mathematisch wird dies dadurch ausgedrückt, daß der Anregungsvektor und der Einflußgrößenvektor als leer angenommen werden. Unter dieser Voraussetzung, d. h. ohne Anregung und Einflußgrößen, wird der empirische Zusammenhang zwischen dem zu messenden Vektor x und den Rohmeßergebnissen $\{Yn\}$ mit Hilfe einer Funktion g (t; p) modelliert, welche eine Impulsantwort eines Meßkanals darstellt. Die Funktion g (t; p) stellt also einen Zusammenhang zwischen den Rohmeßergebnissen $\{y\}$ und dem zu messenden Vektor x (t) her, wobei das Meßobjekt keinen äußeren Anregungen und Einflußgrößen ausgesetzt ist. Diese Modellierung betrifft also den Meßkanal und nicht das Meßobjekt. Für die weitere Analyse wird das Integralmodell durch eine gewöhnliche Differentialgleichung ersetzt und das Ziel, den Meßprozeß besser nachbilden und optimieren zu können, durch die Lösung der Differentialgleichung erreicht. Dabei wurde eine zufriedenstellende dynamische Rekonstruktion und Kalibrierung (DRC) erst mit verbesserter Computertechnik möglich.

Es handelt sich also allein um die Bestimmung des Verhaltens des Meßkanals selbst. Dies ist eine vollkommen andere Problematik als diejenige, den Zusammenhang zwischen einer physikalischen Anregung eines Stoffes (Meßobjekt) und dessen physikalischer Antwort nachzubilden.

Der Erfindung liegt die Aufgabe zugrunde, ein Verfahren gemäß Anspruch 1 zu schaffen, das für weitgehend beliebige Anregungen eine wirkungsvolle Auswertung der Antwort ermöglicht, sowie eine Vorrichtung gemäß Anspruch 16 zur Durchführung dieses Verfahrens anzugeben.

Erfindungsgemäß wird diese Aufgabe hinsichtlich des Verfahrens dadurch gelöst, daß für die Auswertung ein eine endliche Anzahl von Parametern enthaltendes mathematisches Modell vorgegeben wird, das den Zusammenhang zwischen der Anregung und der Antwort beschreibt, daß diese Parameter aufgrund des Modells aus der Zeitreihe von Werten der Anregung und von Meßwerten der Antwort bestimmt werden, und daß die Wärmekapazität aus dem Modell nach der Bestimmung seiner Parameter berechnet wird. Nach der erfindungsgemäß durchgeführten Bestimmung der Parameter wird der Zusammenhang zwischen der Anregung und der Antwort durch das mathematische Modell vollständig beschrieben. Dadurch kann das Modell einerseits zur Berechnung von charakteristischen Eigenschaften des Stoffs verwendet werden. Andererseits können die Antworten des Stoffs auf beliebige Anregungen berechnet werden. Sofern die Anregung in einer zur Durchführung des Verfahrens bestimmten Vorrichtung in Abwesenheit des zu untersuchenden Stoffs hervorgerufen wird, können aus dem Modell anstelle der charakteristischen Größen des Stoffs die charakteristischen Größen dieser Vorrichtung bestimmt werden.

Eine besonders wichtige Ausführungsform besteht darin, daß wenigstens ein Anteil des Modells als zeitinvariant und linear angesetzt wird. Diese Ausführungsform berücksichtigt den Umstand, daß in vielen Fällen der Zusammenhang zwischen der Anregung und der Antwort zumindest näherungsweise linear und zeitinvariant ist. In einem solchen linearen, zeitinvarianten Modell läßt sich der Zusammenhang zwischen dem der Anregung entsprechenden Eingangssignal und dem der Antwort entsprechenden Ausgangssignal bekanntlich mittels der Impulsantwortfunktion h(t) beschreiben. Wenn die Parameter des Modells bestimmt sind, lässt sich daher beispielsweise die Impulsantwortfunktion direkt ermitteln. Die Impulsantwortfunktion h(t) ist bekanntlich das Antwortsignal für den Fall, dass das Anregungssignal die Form einer diracschen Deltafunktion aufweist, die im kontinuierlichen Fall definiert ist durch

$$\delta(t) = \begin{cases} \infty & t = 0 \\ 0 & t \neq 0 \end{cases}$$

$$\int_{-\infty}^{\infty} \delta(t)dt = 1 \tag{1}$$

und im zeitdiskreten Fall durch

$$\delta(t) = \begin{cases} 1, & t = 0 \\ 0, & t = \pm 1, \pm 2, \dots \end{cases} \tag{2}$$

Im zeitkontinuierlichen Fall gilt für ein lineares, zeitinvariantes System der Zusammenhang

$$y(t) = \int_{0}^{\infty} h(t')u(t - t')dt' \tag{3}$$

worin u(t) das Eingangs- oder Anregungssignal, h(t) die Impulsantwortfunktion und y(t) das Ausgangs- oder Antwortsignal bedeutet. Im zeitdiskreten Fall wird dieser Ausdruck durch die nachstehende Summe approximiert

$$y(t) = \sum_{t'=0}^{\infty} h(t')u(t-t')$$

(4)

in der t und t' nur ganzzahlige Werte annehmen, indem ohne Beschränkung der Allgemeinheit der zeitliche Abstand zwischen benachbarten Messzeitpunkten (Abtastintervall) als 1 angesetzt ist. Die Approximation ist um so besser, je kleiner das Abtastintervall oder je höher die Abtastrate ist.

Bekanntlich enthält die Impulsantwortfunktion alle Frequenzen und beschreibt das gesamte dynamische Verhalten des der Anregung ausgesetzten Stoffs. Aus der Impulsantwortfunktion lassen sich die gewünschten Kenngrössen des Stoffs herleiten. So liefert die Fouriertransformation der Impulsantwortfunktion den Frequenzgang. Im Fall der Thermoanalyse, auf den sich die Erfindung bezieht, kann die Impulsantwortfunktion z. B. das Wärmestromsignal nach einem Impuls in der Heizrate, also nach einem Temperatursprung, darstellen. Damit liefert in diesem Beispiel das Integral der Impulsantwortfunktion die Wärmekapazität, und ihre Fouriertransformation enthält die Änderung der Wärmekapazität mit der Frequenz. Es ist daher möglich, das mathematische Modell zu benützen, um weitgehend beliebige Anregungen einzuspeisen und die Stoffeigenschaften aus der Antwort des Modells zu ermitteln. So liefert beispielsweise ein physisch nicht realisierbarer Diracstoss direkt die Impulsantwort und dessen Integral die Wärmekapazität.

Falls die oben erörterte Ausführungsform auf ein System angewendet werden soll, bei dem der Zusammenhang zwischen dem Anregungssignal und dem Antwortsignal einen nichtlinearen Anteil enthält, der nicht vernachlässigt werden kann oder soll, können in einer ersten Alternative alle mit der Nichtlinearität zusammenhängenden Anteile im Anregungssignal und/oder im Antwortsignal abgezogen und nur die solchermassen erhaltenen Differenzsignale der Auswertung mittels des linearen zeitinvarianten Modells unterzogen werden. Dies setzt allerdings voraus, dass die nichtlinearen Teile bekannt sind oder auf irgendeine Weise bestimmt werden können.

Dagegen ist in einer zweiten Alternative vorgesehen, dass das zeitinvariante, lineare Modell erweitert wird, indem ein zur Berücksichtigung eines nichtlinearen Anteils im Antwortsignal dienender mathematischer Ausdruck hinzugefügt wird. Die Bestimmungsgrössen dieses mathematischen Ausdrucks können zusammen mit der Impulsantwortfunktion aus der Zeitreihe von Werten des Anregungssignals und Messwerten des Antwortsignals bestimmt werden. Die Beschreibung des Zusammenhangs zwischen dem Anregungssignal und dem Antwortsignal eines solchen Systems, bei dem eine Nichtlinearität auftritt, nimmt die Form an

$$y_s(t) = X + y(t)$$

mit

(5)

$$y(t) = \int_0^{\infty} h(t-t')\, u(t')\, dt'$$

Diese zweite Alternative ist vor allem für die häufig vorkommenden Verhältnisse von Interesse, in denen der nichtlineare Anteil $X(t)$ des Antwortsignals $y_s(t)$ im Vergleich zu dessen linearem Anteil $y(t)$ nur langsam veränderlich ist. Dies ist beispielsweise bei der dynamischen Thermoanalyse der Fall. Dabei setzt sich der dem Antwortsignal entsprechende Wärmefluss aus einem schnellen Änderungen des der Heizrate entsprechenden Anregungssignals folgenden, reversiblen Wärmefluss, der mit der Wärmekapazität des Stoffs zusammenhängt, und einem nichtreversiblen Wärmefluss zusammen, der durch thermische Ereignisse in dem Stoff (beispielsweise Phasenumwandlungen oder chemische Reaktionen) bestimmt ist. Weil thermische Ereignisse in der Regel eine gewisse Zeit benötigen, kann der damit verbundene Wärmefluss schnellen Änderungen des Anregungssignals nicht folgen und ist relativ langsam veränderlich.

Deshalb kann man in solchen Fällen die Dauer der für die Auswertung verwendeten Zeitreihen von Messwerten auf ein so kurzes Zeitfenster beschränken, dass sich in diesem Zeitfenster der nichtlineare Anteil $X(t)$ als eine Konstante manifestiert, also in dem jeweiligen Zeitfenster als

$$X = c$$

(6)

angesetzt werden kann. Bei einer signifikanten Änderung innerhalb des Zeitfensters kann statt dessen ein linearer Ansatz gewählt werden

$$X(t) = c_0 + c_1 \cdot (t - t_0) \tag{7}$$

Dabei bedeutet $t_0$ eine frei wählbare Konstante. Zweckmässigerweise wird man für $t_0$ den Zeitpunkt wählen, der in der Mitte des jeweils verwendeten Zeitfensters liegt. Falls auch dieser lineare Ansatz im Rahmen der geforderten Genauigkeit nicht ausreicht, lassen sich in analoger Weise in den Ansatz für X(t) auch quadratische Terme oder solche noch höherer Ordnung oder andere Funktionen einschliessen. Auf diese Weise wird durch die Auswertung sowohl der lineare oder reversible Anteil als auch der nichtlineare oder nichtreversible Anteil des Antwortsignals getrennt bestimmt.

Der in den Gleichungen (3) bzw. (4) angegebene Ansatz für die Beschreibung des linearen zeitinvarianten Systems lässt sich direkt als Ansatz für das mathematische Modell verwenden und in bekannter Weise durch z-Transformation in die Form

$$y(z) = H(z)u(z) \tag{8}$$

bringen, wobei y(z), H(z) und u(z) die z-Transformierten von y(t), h(t) und u(t) sind. Das mit u(t) beaufschlagte Modell liefert den Schätzwert $\hat{y}(t)$.

In diesem Zusammenhang zeichnet sich eine besonders vorteilhafte Ausführungsform des erfindungsgemässen Verfahrens dadurch aus, dass die z-transformierte Impulsantwortfunktion als rationale Funktion angesetzt wird. Dies bedeutet, dass H(z) die Form annimmt

$$H(z) = \frac{B(z)}{A(z)} \tag{9}$$

wobei B(z) und A(z) Polynome vom Grad $n_b$ bzw. $n_a$ der Variablen z sind. Es hat sich gezeigt, dass dieser rationale Ansatz für H(z) viele praktische Fälle exakt oder in hinreichend guter Näherung beschreibt. Dies ist eine parametrische Beschreibung des Modells, wobei die Parameter durch die Koeffizienten des Nennerpolynoms A(z) und des Zählerpolynoms B(z) bestimmt sind. Damit nimmt Gleichung (8) die Form an

$$A(z)y(z) = B(z)u(z) \tag{10}$$

Die in Gleichung (10) dargestellte Ausführungsform ist auch anwendbar auf den Fall, bei dem die Anregung aus mehr als einem Wert besteht, also mehr als eine Anregungsgrösse enthält, oder die Antwort aus mehr als einem Signal besteht, also mehr als eine Antwortgrösse enthält. A(z) ist dann eine Matrix, die für jedes Signal die Koeffizienten des zugehörigen Nennerpolynoms enthält. B(z) ist eine Matrix, die für jeden Wert der Anregung die Koeffizienten des zugehörigen Zählerpolynoms enthält. Der Fachmann begegenet keinen besonderen Schwierigkeiten, wenn er die angegebenen Gleichungen auf Mehrgrössensysteme anwenden will. Hinweise dazu finden sich in Lehrbüchern, zum Beispiel im MatLab User Manual: System Identification Toolbox User's Guide; The MathWork, Inc. - November 2000, 4th printing for version 5.0 (Relase 12), pages 3-37 - 3-39. Das Prinzip des Verfahrens wird im Folgenden anhand des Beispiels mit einem Wert der Anregung und einem Signal der Antwort weiter erläutert, was aber nicht im einschränkenden Sinn verstanden werden darf. Das Verfahren umfasst auch Anregungen mit mehr als einer Anregungsgrösse und/oder Antworten mit mehr als einer Antwortgrösse.

Zur Bestimmung der Impulsantwortfunktion ist im Rahmen der Erfindung als zweckmässige Möglichkeit vorgesehen, dass die Ordnung $n_a$ des Nennerpolynoms und die Ordnung $n_b$ des Zählerpolynoms der z-transformierten Impulsantwortfunktion fest vorgegeben wird und die Koeffizienten dieser Polynome derart bestimmt werden, dass der durch das Modell beschriebene Zusammenhang zwischen dem Anregungssignal und dem Antwortsignal mit der Zeitreihe der Messwerte möglichst gut übereinstimmt.

Zweckmässig wird dabei so vorgegangen, dass der durch die z-transformierte Impulsantwortfunktion beschriebene Zusammenhang zwischen dem Anregungssignal und dem Antwortsignal im Zeitbereich dargestellt und in das dadurch erhaltene System linearer Gleichungen eine zu dessen Auflösung nach den Polynomkoeffizienten ausreichende Zeitreihe von Messwerten eingesetzt wird.

Bekanntlich erhält man die Darstellung im Zeitbereich durch Anwendung des Verschiebeoperators q, der bei Anwendung auf die z-transformierte Impulsantwortfunktion zum diskreten Zeitpunkt $t_k$ den Funktionswert zum vorangegangenen diskreten Abtastzeitpunkt $t_{k-1}$ liefert. Es gilt also

$$
\begin{aligned}
qh(t_k) &= h(t_{k-1}) \\
q^n h(t_k) &= h(t_{k-n})
\end{aligned}
\qquad (11)
$$

Die Anwendung des Verschiebeoperators q von Gleichung (11) überführt Gleichung (10) in den Zeitbereich mit dem Ergebnis

$$
\begin{aligned}
y_k = &-a_1 \cdot y_{k-1} - a_2 \cdot y_{k-2} - ..... - a_{na} \cdot y_{k-na} \\
&+ b_1 \cdot u_{k-1} + b_2 \cdot u_{k-2} + ..... + b_{k-nb} \cdot u_{k-nb} + \varepsilon_k
\end{aligned}
\qquad (12)
$$

In Gleichung (12) bezeichnen die Indizes k, k-1, ... die diskreten Werte der Abtastzeitpunkte, $a_1$, $a_2$, ..., $a_{na}$ die Koeffizienten des Nennerpolynoms in Gleichung (9) und $b_1$, $b_2$, ..., $b_{nb}$ die Koeffizienten des Zählerpolynoms in Gleichung (9). Dabei ist in Gleichung (12) ohne Beschränkung der Allgemeinheit angenommen, dass $a_0 = 1$. Ferner wurde angenommen, dass der Koeffizient $b_0$ Null ist, weil dies in der Regel bei realen Systemen der Fall ist, da in der Praxis eine instantane Wirkung des Anregungssignals auf das Antwortsignal nicht vorkommt. Es wird jedoch darauf hingewiesen, dass ein von Null verschiedener Wert für $b_0$ in die obige Gleichung (12) eingeschlossen werden könnte, ohne dass sich dadurch die im folgenden beschriebene Behandlung ändert.

Schliesslich ist auf der rechten Seite von Gleichung (12) noch ein Fehlerglied $\varepsilon_k$ hinzugefügt worden, das die Abweichung berücksichtigt, die zwischen dem Modell und dem tatsächlich gemessenen Prozess auftritt.

Fasst man die in Gleichung (12) auftretenden Messwerte des Anregungssignals und des Antwortsignals als Messvektor $\varphi_k$ gemäss

$$
\varphi_k = [-y_{k-1}, -y_{k-2}, ..... - y_{k-na}, u_{k-1}, u_{k-2}, ..., u_{k-nb}]
\qquad (13)
$$

zusammen und die gesuchten Parameterwerte als Parametervektor $\Theta$ gemäss

$$
\Theta = [a_1, a_2, ... a_{na}, b_1, b_2, ..., b_{nb}]^T
\qquad (14)
$$

so nimmt Gleichung (12) in Matrixschreibweise die Form an

$$
y_k = \varphi_k \cdot \Theta + \varepsilon_k
\qquad (15)
$$

Zur vollständigen Bestimmung des Parametervektors $\Theta$ sind somit $n_a + n_b$ Gleichungen erforderlich, was eine ausreichende Zeitreihe von Abtastzeitpunkten k, k-1, ... k-n erfordert.

Das Gleichungssystem wird derart aufgelöst, dass der Gleichungsfehler $\varepsilon_k$ minimiert wird. Dies kann beispielsweise durch die Methode der kleinsten Quadrate geschehen.

Bei der oben erläuterten Hinzufügung eines nichtlinearen Anteils tritt auf der rechten Seite von Gleichung (12) jeweils noch der Term hinzu, der durch die Anwendung des Operatorpolynoms A(q) auf die in Gleichung (6) bzw. (7) angegebenen Ausdrücke erhalten wird. Dies bedeutet, dass der Parametervektor Θ um entsprechende Parameter zu erweitern ist, welche bei der Lösung des Gleichungssystems ebenfalls berechnet werden. Analog ist der Vektor $\varphi_k$ zu erweitern.

Wenn man beispielsweise die Gleichung (7) verwendet, gilt:

$$\varphi_k = [1, t, -y_{k-1}, -y_{k-2}, .... -y_{k-na}, u_{k-1}, u_{k-2}, ..., u_{k-nb}]$$

und $\qquad$ (16)

$$\Theta = [\gamma_1, \gamma_2, a_1, a_2, ... a_{na}, b_1, b_2, ..., b_{nb}]^T$$

wobei gilt:

$$\gamma_1 = c_0 \cdot (1 + a_1 + ... + a_p) - c_1 \cdot (a_1 + 2a_2 + ... + pa_p) \qquad (17)$$

$$\gamma_2 = c_1 \cdot (1 + a_1 + ... + a_p) \qquad (18)$$

Es gilt dann wieder die Gleichung (15), wobei der Vektor $y_k$ aus den Werten $y_s(t)$ in Gleichung (5) aufgebaut ist.

Bei der dynamischen Thermoanalyse, auf die Sich die Erfindung bezieht, besteht das Anregungssignal häufig aus der Überlagerung einer konstanten Heizrate $\beta_u$ mit einem periodisch oder nichtperiodisch veränderlichen Anteil $u_t$, so dass für die gesamte Heizrate, d. h. die Zeitableitung der Temperatur, gilt

$$\frac{dT}{dt} = \beta_u + \dot{u}_t(t) \qquad (19)$$

Eine wichtige Klasse dieser Verfahren besteht darin, dass das Antwortsignal einem Wärmestrom eines dynamischen Thermoanalyseverfahrens entspricht.

Dieser Wärmestrom enthält für das vorstehend angegebene Anregungssignal einen reversiblen linearen Anteil y(t), der dem veränderlichen Anteil u(t) der Heizrate folgt, und einen nichtreversiblen Anteil, der etwa als zeitlich lineare Funktion beschrieben werden kann, wodurch sich insgesamt die Darstellung ergibt

$$\frac{dQ}{dt} = \alpha_0 + \dot{\alpha}_1 t + y(t) \qquad (20)$$

Das vorstehend erörterte Gleichungssystem nimmt für diesen Fall die Form an

$$y_k = \gamma_1 + \gamma_2 \cdot t_k - a_1 \cdot y_{k-1} - a_2 \cdot y_{k-2}..... - a_{na} \cdot y_{k-na} + b_1 \cdot u_{k-1}$$
$$+ b_2 \cdot u_{k-2} ..... + b_{k-nb} \cdot u_{k-nb}$$

$$\Theta = \begin{bmatrix} \gamma_1 & \gamma_2 & a_1 & a_2 & . & . & a_{na} & b_1 & b_2 & . & . & b_{nb} \end{bmatrix}^T$$

(21)

$$\alpha_1 = \frac{\gamma_2}{1 + \sum_{i=1}^{na} a_i} \qquad \alpha_0 = \frac{\gamma_1 + \alpha_1 \cdot \left( \sum_{i=1}^{na} i \cdot a_i \right)}{1 + \sum_{i=1}^{na} a_i}$$

Hierin bestimmen die Parameter $a_1$, $a_2$, ... , $a_{na}$, $b_1$, $b_2$, ... , $b_{nb}$ den reversiblen Anteil und die Parameter $\gamma_1$, $\gamma_2$ den nichtreversiblen Anteil. Aus dem reversiblen Anteil des Wärmestroms lässt sich sodann in bekannter Weise die spezifische Wärmekapazität berechnen.

Wärmeströme können dadurch gemessen werden, dass eine Temperaturdifferenz erfasst wird, die längs des Wärmestrompfades auftritt. Dabei ist aber zu berücksichtigen, dass die Wärmeströme ausser dem durch den zu untersuchenden Stoff hervorgerufenen Wärmestromanteil weitere Anteile enthalten, die durch das für die Durchführung des Thermoanalyseverfahrens verwendete kalorimetrische System hervorgerufen sind. In diesem Fall liefert die Auswertung durch das erfindungsgemässe Verfahren den gesamten Wärmestrom einschliesslich seiner systembedingten Anteile. Die erfindungsgemässe Auswertung ist jedoch auch bei solchen Verfahren anwendbar, bei denen der Wärmestrom eine Differenz von Wärmeströmen zu einer Probe des Stoffs und einem bekannten Referenzstoff ist. Bei diesen Differenzverfahren ist der systembedingte Anteil kleiner.

Das erfindungsgemässe Verfahren ist auch mit Vorteil in dem Fall anwendbar, in dem die Probe einer inerten Referenzprobe entspricht oder in dem das System ohne Probe angeregt wird. In diesem Fall liefert das Verfahren die Geräteeigenschaften.

Weiter ist das erfindungsgemässe Verfahren mit Vorteil für den Fall anwendbar, dass das Antwortsignal einer Temperaturdifferenz eines bekannten dynamischen Thermoanalyseverfahrens (DTA) entspricht.

Das erfindungsgemässe Verfahren ist ferner mit Vorteil in dem Fall anwendbar, dass das Antwortsignal einer Heizleistungsdifferenz eines dynamischen Leistungskompensations-Thermoanalyseverfahrens entspricht. Bei dem Leistungskompensationsverfahren werden die Probe des zu untersuchenden Stoffs und ein bekannter Referenzstoff mit unterschiedlicher Heizleistung derart angeregt, dass die Temperaturdifferenz zwischen Probe und Referenz stets auf Null geregelt wird. In diesem Fall besteht die auszuwertende Antwort der Probe in ihrer im Vergleich zur Referenz unterschiedlichen Leistungsaufnahme.

Allgemein ist noch darauf hinzuweisen, dass die Anregung von vornherein bekannt sein kann, so dass deren Werte nicht gemessen werden müssen. Dies ist jedoch keine notwendige Voraussetzung für die Erfindung. Vielmehr kann die Anregung unbekannt sein und ihre Werte durch Messung ermittelt werden. In diesem Fall ist eine zur Durchführung des Verfahrens geeignete Vorrichtung mit einer zur Messung der Werte der Anregung dienenden Messeinrichtung versehen.

In der folgenden Beschreibung wird die Erfindung unter Bezugnahme auf die Zeichnung näher erläutert. Es zeigt:

Fig. 1     eine schematische Darstellung eines Differenzkalorimeters zur Durchführung einer Ausführungsform des erfindungsgemässen Verfahrens,

Fig. 2     eine schematische Darstellung der bei dieser Ausführungsform des erfindungsgemässen Verfahrens stattfindenden Auswertung,

Fig. 3     ein Schema zur Veranschaulichung der Auswertung zur Bestimmung von Modellparametern, und

Fig. 4     ein Schema zur Veranschaulichung der Berechnung von Antwortwerten durch das Modell.

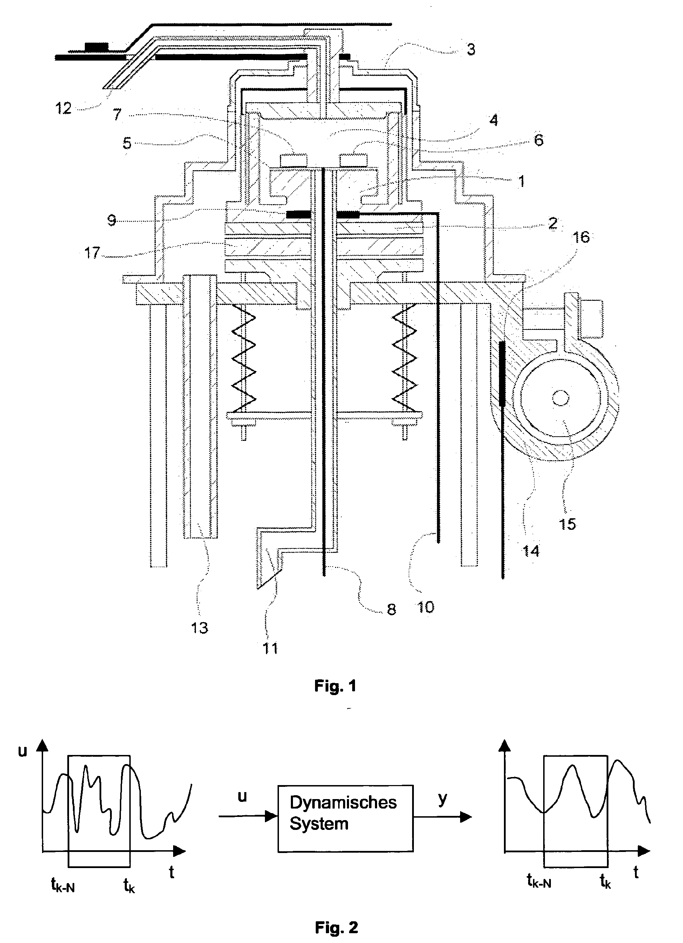

Gemäss dem in Fig. 1 dargestellten Vertikalschnitt weist ein Differenzkalorimeter einen hohlen zylindrischen Ofenblock 1 aus Silber auf, der von einer flachen Widerstandsheizung 2 beheizbar ist. Der Ofenblock 1 ist an seinem oberen Ende von einer Deckelanordnung 3 abgeschlossen, die abgenommen werden kann, um einen Zugang in das Innere 4 des Ofenblocks 1 zum Zwecke der Beschickung zu ermöglichen.

Im Inneren 4 des Ofenblocks 1 erstreckt sich ein scheibenförmiges Substrat 5, das mit dem Ofenblock 1 thermisch gekoppelt ist.

Auf der sich horizontal erstreckenden oberen Radialebene des scheibenförmigen Substrats 5 befindet sich eine Position zur Aufnahme eines Probentiegels 6 und eine dazu thermisch symmetrisch angeordnete Position zur Aufnahme eines Referenztiegels 7. Die Positionen des Probentiegels 6 und des Referenztiegels 7 sind mit je einer Thermoelementanordnung versehen. In dem dargestellten Ausführungsbeispiel sind zwei elektrisch entgegengesetzte Enden der beiden Thermoelementanordnungen auf dem Substrat 5 zusammengeschaltet, während die beiden anderen Enden auf zwei nur schematisch angedeuteten Signalleitungen 8 aus dem Ofenblock 1 herausgeführt sind. Dies hat zur Folge, dass auf den beiden Leitungen 8 ein dem Temperaturunterschied $\Delta T$ zwischen der Probenposition und der Referenzposition entsprechendes thermoelektrisches Signal auftritt. Dieses thermoelektrische Signal entspricht in bekannter Weise der Differenz der beiden Wärmeströme, die zwischen dem Ofenblock 1 und dem Probentiegel 6 einerseits sowie dem Ofenblock 1 und dem Referenztiegel 7 andererseits fliessen.

Die Widerstandsheizung 2 ist in nicht dargestellter Weise an eine gesteuerte Leistungsquelle angeschlossen, welche elektrische Heizenergie liefert. Die Steuerung erfolgt derart, dass ein vorgegebener dynamischer Temperaturverlauf als Funktion der Zeit durchlaufen wird. Dieser Temperaturverlauf wird mit einem in dem Ofenblock 1 angeordneten Platinthermometer 9 erfasst, dessen Ausgangssignal auf einer schematisch dargestellten Signalleitung 10 aus dem Ofenblock 1 herausgeführt ist. Die Signalleitungen 10 führen also ein Signal, das dem vorgegebenen Temperaturverlauf entspricht.

Die Bezugszeichen 11, 12 und 13 bezeichnen eine Spülgaszuführungsleitung, eine Spülgasabführungsleitung bzw. eine Trockengaszuführungsleitung. Ferner bezeichnen in bekannter Weise die Bezugszeichen 14, 15 und 16 einen Kühlflansch, einen Kühlfinger bzw. ein Platinthermometer. Zwischen der Kühlanordnung 14, 15 und der Widerstandsheizung 2 ist ein Wärmewiderstand 17 angeordnet.

Bei diesem Differenzkalorimeter dient der Temperaturverlauf, dem eine Probe in dem Probentiegel 6 innerhalb des Ofenblocks 1 ausgesetzt ist, als Anregung. Das den Temperaturverlauf darstellende Signal auf der Signalleitung 10 wird von einer Auswerteeinrichtung mit hinreichend grosser Abtastrate abgetastet und nach der Zeit differenziert, wodurch die Zeitableitung des Temperaturverlaufs, d. h. die Heizrate, erhalten wird. Synchron dazu wird auch das auf der Signalleitung 8 auftretende Temperaturdifferenzsignal $\Delta T$ abgetastet, das den Differenzwärmestrom als Antwort auf die Anregung darstellt.

Auf diese Weise erhält man eine Zeitreihe von Messpunkten des durch die Heizrate gegebenen Anregungssignals $u(t_k)$, $u(t_{k-1})$, ... sowie des Antwortsignals $y(t_k)$, $y(t_{k-1})$, .... Dies ist schematisch in Fig. 2 dargestellt. In Fig. 2 bezeichnet die Reihe der zwischen $t_k$ und $t_{k-N}$ eingerahmten Messwerte ein Auswertefenster mit einer zur Lösung des vorstehend erörterten Gleichungssystems (15) bzw. (21) ausreichenden Anzahl von Messpunkten. Dies bedeutet, dass $N \geq (n_a + n_b)$ ist. Für jede Lage des Auswertefensters innerhalb des gesamten gemessenen Temperaturverlaufs werden somit die Parameterwerte des Modells neu bestimmt. Mit den solchermassen bestimmten Parametern lässt sich jede Antwort des Systems berechnen, insbesondere seine Impulsantwort.

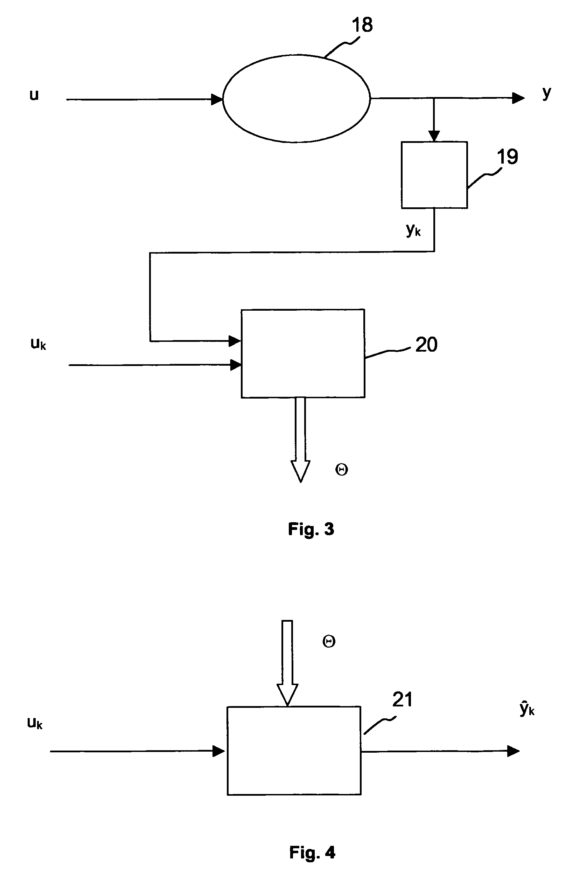

Dies ist in den Fig. 3 und 4 näher veranschaulicht. Dort ist mit u das Anregungssignal und mit y das Antwortsignal bezeichnet. $u_k$ bezeichnet den entweder von vornherein bekannten oder durch Messung ermittelten Wert des Anregungssignals $u(t_k)$ zum Abtastzeitpunkt $t_k$. Ebenso bezeichnet $y_k$ den Messwert des Antwortsignals $y(t_k)$ zum Abtastzeitpunkt $t_k$. $\Theta$ steht für den vorstehend in Gleichung (14) angegebenen Vektor der Parameterwerte.

Mit diesen Bezeichnungen veranschaulicht Fig. 3 die Einwirkung der Anregung u auf die Stoffprobe 18 und die von der Stoffprobe 18 darauf ansprechend abgegebene Antwort y. Eine Messeinrichtung 19 tastet die Antwort y ab und liefert die Abtastwerte $y_k$ an eine Auswerteeinrichtung 20. Letzterer werden auch die in Fig. 3 als bekannt vorausgesetzten Werte $u_k$ der Anregung zugeführt. Mittels dieser Eingangswerte bestimmt die Auswerteeinrichtung 20 in der vorstehend anhand der Gleichungen (1) bis (21) dargelegten Weise den Vektor $\Theta$ der Parameterwerte.

Fig. 4 symbolisiert das Einsetzen des gemäss Fig. 3 erhaltenen Vektors $\Theta$ der Parameterwerte in das mathematische Modell 21. Letzteres modelliert damit den Zusammenhang zwischen der Anregung und der Antwort. Dadurch können, wie in Fig. 4 dargestellt, zu beliebigen Werten $u_k$ der Anregung entsprechende Schätzwerte $\hat{y}_k$ der Antwort berechnet werden.

In dem vorstehenden Beispiel stellt das Antwortsignal die Wärmestromdifferenz zwischen Probe und Referenz dar.

Die vorstehend erläuterte Auswertung ist praktisch für alle Signalformen des dynamischen Anregungssignals u(t) geeignet. Insbesondere kann das Anregungssignal ein stochastisches Signal oder ein pseudostochastisches Signal sein, bei dem sich eine stochastische Signalfolge endlicher Dauer wiederholt.

Verzeichnis der Bezugzeichen

1    Ofenblock
2    Widerstandsheizung
3    Deckelanordnung
4    Inneres
5    Substrat
6    Probentiegel
7    Referenztiegel
8    Signalleitung
9    Platinthermometer
10   Signalleitung
11   Spülgaszuführungsleitung
12   Spülgasabführungsleitung
13   Trockengaszuführungsleitung
14   Kühlflansch
15   Kühlfinger
16   Platinthermometer
17   Wärmewiderstand
18   Stoffprobe
19   Messeinrichtung
20   Auswerteeinrichtung
21   mathematisches Modell


**Patentansprüche**

1.  Verfahren zur thermoanalytischen Stoffuntersuchung, bei dem ein Stoff einer Anregung mit mindestens einer einer veränderlichen Temperatur entsprechenden Anregungsgröße ausgesetzt wird, die eine beobachtbare Antwort mit mindestens einer einem Wärmestrom eines dynamischen Thermoanalyseverfahrens oder einer Heizleistungsdifferenz eines dynamischen Leistungskompensations-Thermoanalyseverfahrens entsprechenden Antwortgröße hervorruft, welche mit Hilfe einer Zeitreihe von Werten der Anregung und Meßwerten der Antwort zur Ermittlung der Wärmekapazität des Stoffs ausgewertet wird, **dadurch gekennzeichnet, daß** für die Auswertung ein eine endliche Anzahl von Parametern enthaltendes mathematisches Modell vorgegeben wird, das den Zusammenhang zwischen der Anregung und der Antwort beschreibt, daß diese Parameter aufgrund des Modells aus der Zeitreihe von Werten der Anregung und von Meßwerten der Antwort bestimmt werden, und daß die Wärmekapazität aus dem Modell nach der Bestimmung seiner Parameter berechnet wird.

2.  Verfahren nach Anspruch 1, **dadurch gekennzeichnet, daß** aus dem Modell nach der Bestimmung seiner Parameter die Impulsantwortfunktion für den Stoff ermittelt und die Wärmekapazität als Integral der Impulsantwortfunktion berechnet wird.

3.  Verfahren nach Anspruch 2, **dadurch gekennzeichnet, daß** aus der Fouriertransformierten der Impulsantwortfunktion die Frequenzabhängigkeit der Wärmekapazität berechnet wird.

4.  Verfahren nach einem der Ansprüche 1 bis 3, **dadurch gekennzeichnet, daß** die Zeitreihe von Anregungswerten frei vorgegeben wird.

5.  Verfahren nach einem der Ansprüche 1 bis 4, **dadurch gekennzeichnet, daß** das Modell nach der Bestimmung seiner Parameter zur Berechnung des Zusammenhangs zwischen Werten der Anregung und der Antwort verwendet wird.

6.  Verfahren nach einem der Ansprüche 1 bis 5, **dadurch gekennzeichnet, daß** die Parameter für ein mindestens die Zeitreihe der Werte der Anregung umfassendes Zeitintervall als zeitlich konstant angesetzt werden.

7.  Verfahren nach einem der Ansprüche 1 bis 6, **dadurch gekennzeichnet, daß** für unterschiedliche Zeitintervalle die Parameter mittels innerhalb jedes Zeitintervalls gewählter Zeitreihen jeweils getrennt bestimmt werden.

8. Verfahren nach einem der Ansprüche 1 bis 7, **dadurch gekennzeichnet, daß** das Modell einen Anteil aufweist, der als zeitinvariant und linear angesetzt wird.

9. Verfahren nach Anspruch 8, **dadurch gekennzeichnet, daß** dem zeitinvarianten, linearen Anteil ein zur Berücksichtigung eines nichtlinearen Anteils in der Antwort dienender mathematischer Ausdruck hinzugefügt wird.

10. Verfahren nach Anspruch 8 oder 9, **dadurch gekennzeichnet, daß** der lineare Anteil im z-Bereich als rationale Funktion angesetzt wird.

11. Verfahren nach Anspruch 10, **dadurch gekennzeichnet, daß** die Ordnung $n_a$ des Nennerpolynoms und die Ordnung $n_b$ des Zählerpolynoms des linearen Anteils des Modells im z-Bereich vorgegeben wird und die Koeffizienten dieser Polynome derart bestimmt werden, daß der durch das Modell beschriebene Zusammenhang zwischen der Anregung und der Antwort mit der Zeitreihe der Meßwerte möglichst gut übereinstimmt.

12. Verfahren nach Anspruch 11, **dadurch gekennzeichnet, daß** der durch den linearen Anteil des Modells im z-Bereich beschriebene Zusammenhang zwischen der Anregung und der Antwort im Zeitbereich dargestellt und in das **dadurch** erhaltene System linearer Gleichungen eine zu dessen Auflösung nach den Polynomkoeffizienten ausreichende Zeitreihe von Werten der Anregung und Meßwerten der Antwort eingesetzt wird.

13. Verfahren nach Anspruch 12, **dadurch gekennzeichnet, daß** ein bei der Auflösung auftretender Gleichungsfehler minimiert wird.

14. Verfahren nach einem der Ansprüche 1 bis 13, **dadurch gekennzeichnet, daß** der Wärmestrom eine Differenz von Wärmeströmen zu einer Probe des Stoffs und einem bekannten Referenzstoff ist.

15. Verfahren nach einem der Ansprüche 1 bis 14, **dadurch gekennzeichnet, daß** die Anregung in einer zur Durchführung des Verfahrens bestimmten Vorrichtung in der Abwesenheit des zu untersuchenden Stoffs hervorgerufen und aus dem solchermaßen bestimmten Modell die Wärmekapazität der Vorrichtung bestimmt wird.

16. Vorrichtung zur Durchführung des Verfahrens nach einem der Ansprüche 1 bis 15, mit einer Einrichtung, von der eine Probe des Stoffs einer dynamischen Anregung mit mindestens einer einer veränderlichen Temperatur entsprechenden Anregungsgröße aussetzbar ist, die eine beobachtbare Antwort mit mindestens einer einem Wärmestrom eines dynamischen Thermoanalyseverfahrens oder einer Heizleistungsdifferenz eines dynamischen Leistungskompensations-Thermoanalyseverfahrens entsprechenden Antwortgröße hervorruft, einer Einrichtung zum Messen eines der Antwort entsprechenden Antwortsignals und einer zum Auswerten der Antwort auf der Grundlage einer Zeitreihe von Werten der Anregung und Meßwerten des Antwortsignals aus der Meßeinrichtung und zur Ermittlung der Wärmekapazität des Stoffs dienenden Einrichtung, **dadurch gekennzeichnet, daß** die Auswerteeinrichtung eine Recheneinrichtung aufweist, in der ein den Zusammenhang zwischen der Anregung und der Antwort beschreibendes, eine endliche Anzahl von Parametern enthaltendes mathematisches Modell festgelegt ist und in der diese Parameter aufgrund des Modells aus der Zeitreihe von Werten der Anregung und von Meßwerten des Antwortsignals berechenbar sind und in der die Wärmekapazität aus dem Modell nach der Bestimmung seiner Parameter berechenbar ist.

17. Vorrichtung nach Anspruch 16, **dadurch gekennzeichnet, daß** die Anregungseinrichtung eine einen TempPraturverlauf als Funktion der Zeit erzeugende Einrichtung und eine zur thermischen Ankopplung der Probe dienende Einrichtung aufweist, wobei die Meßeinrichtung zur Messung eines von der Probe beeinflußten Wärmestroms dient.

18. Vorrichtung nach Anspruch 17, **dadurch gekennzeichnet, daß** die Ankopplungseinrichtung eine zur symmetrischen thermischen Ankopplung eines Referenzmaterials dienende Einrichtung aufweist und die Meßeinrichtung zur Messung der Differenz zwischen dem Wärmestrom zur Probe und dem Wärmestrom zum Referenzmaterial dient.

19. Vorrichtung nach Anspruch 16, **dadurch gekennzeichnet, daß** die Anregungseinrichtung eine einen Temperaturverlauf als Funktion der Zeit erzeugende Einrichtung, eine zur thermischen Ankopplung der Probe und eines Referenzmaterials dienende Einrichtung und eine eine Temperaturdifferenz zwischen der Probe und dem Referenzmaterial auf Null regelnde Einrichtung aufweist, wobei die Meßeinrichtung zur Messung der für die Nullregelung der Temperaturdifferenz erforderlichen Differenz zwischen den der Probe und dem Referenzmaterial zugeführten Heizleistungen dient.

**20.** Vorrichtung nach einem der Ansprüche 16 bis 19, **dadurch gekennzeichnet, daß** eine die Werte des Anregungssignals liefernde Einrichtung zum Messen eines der Anregung entsprechenden Anregungssignals vorgesehen ist.


**Claims**

**1.** Method for the examination of a material by thermal analysis, in which a material is subjected to excitation by at least one exciting variable corresponding to a variable temperature, which exciting variable produces an observable response in the form of at least one response variable corresponding to a heat flow in a dynamic method of thermal analysis or to a difference in heating energy in a dynamic energy-compensating method of thermal analysis, which response variable is evaluated by means of a time series of values of the excitation and of measured values of the response to allow the heat capacity of the material to be determined, **characterised in that** there is laid down for the evaluation a mathematical model which comprises a finite number of parameters and which defines the relationship between the excitation and the response, **in that** these parameters are determined, on the basis of the model, from the time series of values of the excitation and of measured values of the response, and **in that** the heat capacity is calculated from the model after the parameters for the latter have been determined.

**2.** Method according to claim 1, **characterised in that** the impulse response function for the material is determined from the model once the parameters for the latter have been determined, and the heat capacity is determined as an integral of the impulse response function.

**3.** Method according to claim 2, **characterised in that** the dependence of the heat capacity on frequency is calculated from the Fourier transform of the impulse response function.

**4.** Method according to one of claims 1 to 3, **characterised in that** the time series of excitation values is freely preset.

**5.** Method according to one of claims 1 to 4, **characterised in that**, the parameters for it having been determined, the model is used to calculate the relationship between values of the excitation and of the response.

**6.** Method according to one of claims 1 to 5, **characterised in that** the parameters for an interval of time which at least comprises the time series of the values of the excitation are set as constant over time.

**7.** Method according to one of claims 1 to 6, **characterised in that**, for different intervals of time, the parameters are determined separately by means of time series which are selected within each given interval of time.

**8.** Method according to one of claims 1 to 7, **characterised in that** the model has a part which is set to be time-invariant and linear.

**9.** Method according to claim 8, **characterised in that** the time-invariant linear part has added to it a mathematical expression which serves to take account of a non-linear component in the response.

**10.** Method according to claim 8 or 9, **characterised in that** the linear component is set to be a rational function in the z range.

**11.** Method according to claim 10, **characterised in that** the order $n_a$ of the denominator polynomial of the linear part of the model and the order $n_b$ of its numerator polynomial are preset in the z range, and the coefficients of these polynomials are determined in such a way that the relationship defined by the model between the excitation and the response is as good a match as possible to the time series of the measured values.

**12.** Method according to claim 11, **characterised in that** the relationship between the excitation and the response which is defined in the z range by the linear part of the model is represented in the time domain, and the system of linear equations which is obtained in this way has inserted in it a time series of values of the excitation and of measured values of the response which is sufficient to allow it to be solved with respect to the polynomial coefficients.

**13.** Method according to claim 12, **characterised in that** an error in equality which occurs in the course of the solving process is minimised.

**14.** Method according to one of claims 1 to 13, **characterised in that** the heat flow is a difference in the heat flows to a sample of the material and to a known reference material.

**15.** Method according to one of claims 1 to 14, **characterised in that** the excitation is produced, in an apparatus intended for the performance of the method, in the absence of the material to be examined, and the heat capacity of the apparatus is determined from the model which is determined in this way.

**16.** Apparatus for performing the method according to one of claims 1 to 15, having a means by which a sample of the material can be subjected to a dynamic excitation by at least one exciting variable corresponding to a variable temperature, which exciting variable produces an observable response in the form of at least one response variable corresponding to a heat flow in a dynamic method of thermal analysis or to a difference in heating energy in a dynamic energy-compensating method of thermal analysis, having a means of measuring a response signal corresponding to the response, and having a means serving to evaluate the response on the basis of a time series of values of the excitation and of measured values of the response signal from the measuring means and to determine the heat capacity of the material, **characterised in that** the evaluating means has a calculating means in which a mathematical model is laid down which comprises a finite number of parameters and which defines the relationship between the excitation and the response, and in which calculating means these parameters can be calculated, on the basis of the model, from the time series of values of the excitation and of measured values of the response signal, and in which calculating means the heat capacity can be calculated from the model after the parameters of the latter have been determined.

**17.** Apparatus according to claim 16, **characterised in that** the exciting means has a means which generates a variation in temperature as a function of time and a means which serves to couple heat into the specimen, the measuring means serving to measure a heat flow affected by the specimen.

**18.** Apparatus according to claim 17, **characterised in that** the coupling means has a means which serves to couple heat symmetrically into a reference material, and the measuring means serves to measure the difference between the heat flow to the specimen and the heat flow to the reference material.

**19.** Apparatus according to claim 16, **characterised in that** the exciting means has a means which generates a variation in temperature as a function of time, a means which serves to couple heat into the specimen and a reference material, and a means which regulates the difference in temperature between the specimen and the reference material to zero, the measuring means serving to measure the difference between the heating energies fed to the specimen and to the reference material which is required to allow the difference in temperature to be regulated to zero.

**20.** Apparatus according to one of claims 16 to 19, **characterised in that** a means which supplies the values of the exciting signal is provided for the measurement of an exciting signal corresponding to the excitation.

**Revendications**

**1.** Procédé d'examen de matériaux par thermoanalyse, selon lequel un matériau est exposé à une excitation avec au moins une grandeur d'excitation qui correspond à une température variable et engendre une réponse observable avec au moins une grandeur de réponse qui correspond à un flux thermique d'un procédé de thermoanalyse dynamique ou à une différence de puissance de chauffage d'un procédé de thermoanalyse de compensation de puissance dynamique et qui est exploitée à l'aide d'une série chronologique de valeurs de l'excitation et de valeurs mesurées de la réponse, aux fins de déterminer la capacité calorifique du matériau, **caractérisé en ce que** l'on préétablit pour l'exploitation un modèle mathématique qui comporte un nombre fini de paramètres et décrit la relation entre l'excitation et la réponse, **en ce que** ces paramètres sont déterminés sur la base du modèle, à partir de la série chronologique de valeurs de l'excitation et de valeurs mesurées de la réponse, et **en ce que** la capacité calorifique est calculée à partir du modèle, après la détermination de ses paramètres.

**2.** Procédé selon la revendication 1, **caractérisé en ce que** l'on détermine à partir du modèle, après la détermination de ses paramètres, la fonction de réponse à une impulsion pour le matériau et on calcule la capacité calorifique en tant qu'intégrale de la fonction de réponse à une impulsion.

**3.** Procédé selon la revendication 2, **caractérisé en ce que** l'on calcule la variation de la capacité calorifique en fonction de la fréquence, à partir de la transformée de Fourier de la fonction de réponse à une impulsion.

**4.** Procédé selon une des revendications 1 à 3, **caractérisé en ce que** la série chronologique de valeurs d'excitation est prédéfinie librement.

**5.** Procédé selon une des revendications 1 à 4, **caractérisé en ce que** le modèle, après la détermination de ses paramètres, est utilisé pour calculer la relation entre des valeurs de l'excitation et de la réponse.

**6.** Procédé selon une des revendications 1 à 5, **caractérisé en ce que** les paramètres pour un intervalle de temps comprenant au moins la série chronologique des valeurs de l'excitation sont fixés constants dans le temps.

**7.** Procédé selon une des revendications 1 à 6, **caractérisé en ce que** pour des intervalles de temps différents, les paramètres sont chaque fois déterminés séparément au moyen de séries chronologiques choisies à l'intérieur de chaque intervalle de temps.

**8.** Procédé selon une des revendications 1 à 7, **caractérisé en ce que** le modèle présente une fraction qui est fixée comme étant invariante dans le temps et linéaire.

**9.** Procédé selon la revendication 8, **caractérisé en ce que** l'on ajoute à la fraction linéaire, invariante dans le temps, une expression mathématique servant à prendre en compte une fraction non linéaire.

**10.** Procédé selon la revendication 8 ou 9, **caractérisé en ce que** la fraction linéaire est fixée en tant que fonction rationnelle dans la zone z.

**11.** Procédé selon la revendication 10, **caractérisé en ce que** l'ordre $n_a$ du polynôme dénominateur et l'ordre $n_b$ du polynôme numérateur de la fraction linéaire du modèle sont prédéfinis dans la zone z et les coefficients de ces polynômes sont déterminés de manière telle que la relation entre l'excitation et la réponse, qui est décrite par le modèle, coïncide de manière optimale avec la série chronologique des valeurs mesurées.

**12.** Procédé selon la revendication 11, **caractérisé en ce que** la relation entre l'excitation et la réponse, qui est décrite dans la zone z par la fraction linéaire du modèle, est représentée dans le domaine du temps et que l'on insère dans le système d'équations linéaires ainsi obtenu, une série chronologique de valeurs de l'excitation et de valeurs mesurées de la réponse, qui est suffisante pour la résolution dudit système selon le coefficient des polynômes.

**13.** Procédé selon la revendication 12, **caractérisé en ce qu'**une erreur d'équation qui apparaît lors de la résolution est minimisée.

**14.** Procédé selon une des revendications 1 à 13, **caractérisé en ce que** le flux thermique est une différence de flux thermiques vers une éprouvette du matériau et vers un matériau de référence connu.

**15.** Procédé selon une des revendications 1 à 14, **caractérisé en ce que** l'excitation est engendrée dans un dispositif destiné à la mise en oeuvre du procédé, en l'absence du matériau à examiner, et que l'on calcule la capacité calorifique du dispositif à partir du modèle ainsi déterminé.

**16.** Dispositif pour la mise en oeuvre du procédé selon une des revendications 1 à 15, comprenant un dispositif qui permet d'exposer une éprouvette du matériau à une excitation dynamique avec au moins une grandeur d'excitation qui correspond à une température variable et engendre une réponse observable avec au moins une grandeur de réponse qui correspond à un flux thermique d'un procédé de thermoanalyse dynamique ou à une différence de puissance de chauffage d'un procédé de thermoanalyse de compensation de puissance dynamique; comprenant un dispositif pour mesurer un signal de réponse correspondant à la réponse, et un dispositif servant à exploiter la réponse sur la base d'une série chronologique de valeurs de l'excitation et de valeurs mesurées du signal de réponse, provenant du dispositif de mesure, et à calculer la capacité calorifique du matériau, **caractérisé en ce que** le dispositif d'exploitation présente un dispositif de calcul dans lequel est défini un modèle mathématique, décrivant la relation entre l'excitation et la réponse et comportant un nombre fini de paramètres, et dans lequel ces paramètres peuvent être calculés sur la base du modèle, à partir de la série chronologique de valeurs de l'excitation et de valeurs mesurées du signal de réponse, et dans lequel la capacité calorifique peut être calculée à partir du modèle, après la détermination de ses paramètres.

**17.** Dispositif selon la revendication 16, **caractérisé en ce que** le dispositif d'excitation présente un moyen générant une variation de température en tant que fonction du temps, et un moyen servant au couplage thermique de l'éprouvette, le dispositif de mesure servant à mesurer un flux thermique influencé par l'éprouvette.

18. Dispositif selon la revendication 17, **caractérisé en ce que** le moyen de couplage présente un moyen servant au couplage thermique symétrique d'un matériau de référence, et le dispositif de mesure sert à mesurer la différence entre le flux thermique vers l'éprouvette et le flux thermique vers le matériau de référence.

19. Dispositif selon la revendication 16, **caractérisé en ce que** le dispositif d'excitation présente un moyen générant une variation de température en tant que fonction du temps, un moyen servant au couplage thermique de l'éprouvette et d'un matériau de référence, et un moyen réglant à zéro une différence de température entre l'éprouvette et le matériau de référence, le dispositif de mesure servant à mesurer la différence entre les puissances de chauffage apportées à l'éprouvette et au matériau de référence, qui est nécessaire au réglage à zéro de la différence de température.

20. Dispositif selon une des revendications 16 à 19, **caractérisé en ce qu'**il est prévu un dispositif fournissant les valeurs du signal d'excitation, en vue de mesurer un signal d'excitation correspondant à l'excitation.

**Fig. 1**

**Fig. 2**

u → (18) → y

19

$y_k$

$u_k$ → 20

$\Theta$

**Fig. 3**

$\Theta$

$u_k$ → 21 → $\hat{y}_k$

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0559362 A
- EP 1091208 A
- US 4842417 A
- US 5453940 A
- JP 10123034 A

**In der Beschreibung aufgeführte Nicht-Patentliteratur**

- **MIEKINA et al.** Dynamic reconstruction of measurements and calibration of measuring systems. *Measure,* 1993, vol. 14, 63-72
- *Lehrbüchern, zum Beispiel im MatLab User Manual: System Identification Toolbox User's Guide,* November 2000, 3-37 339